# EUROPÄISCHE PATENTANMELDUNG

(11) **EP 1 555 059 A1**
(43) Veröffentlichungstag der Anmeldung: **20.07.2005**
(21) Anmeldenummer: 05100112.1
(22) Anmeldetag: 11.01.2005
(51) Int. Cl.: B01D 37/02

(54) **Additivfilter**

(30) Priorität: 13.01.2004 DE 102004001983
(71) Anmelder: MANN+HUMMEL GmbH, 71638 Ludwigsburg (DE)
(72) Erfinder: Klein, Gunnar-Marcel, 71579, Spiegelberg (DE); Jokschas, Günter, 71540, Murrhardt (DE); Kolczyk, Markus, 74395, Mundelsheim (DE); Harenbrock, Michael, 71640, Ludwigsburg (DE); Kramer, Jörg, 71686, Remseck-Hochdorf (DE)

(57) **Zusammenfassung**

Die Erfindung beschreibt eine Vorrichtung zur Filterung von flüssigen Fluiden, mit einem Gehäuse, einem im Gehäuse angeordneten Fluideinlass und einem im Gehäuse angeordneten Fluidauslass, wobei zwischen Fluideinlass und Fluidauslass Mittel zur Entfernung von Partikeln aus dem Fluidstrom vorhanden sind, wobei in der Vorrichtung wenigstens ein Additiv zur funktionalen Änderung der Fluideigenschaften angeordnet ist, wobei das Additiv in kolloid-disperser, formbeständiger elastischer Form im Innenvolumen der Vorrichtung korrespondierend zu wenigstens einer geometrischen Vorgabe durch den inneren Aufbau der Vorrichtung oder des Mittels zur Entfernung der Partikel angeordnet und geformt ist.

## Beschreibung

### Stand der Technik

Die Erfindung betrifft einen Fluidfilter nach dem Oberbegriff des Patentanspruches 1. Ferner betrifft die Erfindung ein Verfahren zur Additivbeimengung zu einer Flüssigkeit nach dem Oberbegriff des Patentanspruches 23.

Es ist bekannt, Betriebsflüssigkeiten über Filter so zu konditionieren, dass das Flüssigkeitssystem vor Abnutzung und Schäden geschützt wird. Dieses erfolgt dadurch, dass Partikel, insbesondere verschleißrelevante Partikel, über Filtration dem Flüssigkeitskreislauf entzogen werden. Ebenso ist es bekannt, einem Filter zur kontinuierlichen Ölpflege spezielle chemische Substanzen zuzufügen. Im Kontakt mit der zu filternden Flüssigkeit lösen sich die chemischen Substanzen (Additive) auf und geben hierbei ihre Wirkstoffe ab. Diese Wirkstoffe erfüllen unter anderem folgende Funktionen: Sie schützen vor Öleindickung, vor Viskositätsanstieg durch Oxidation, sie verbessern die Gleiteigenschaften bewegter Teile, lösen Ablagerungen, dispergieren Fremdstoffe, bieten einen Verschließschutz und verbessern das Fließverhalten. Diese Additive können an einer beliebigen Stelle im Filtersystem untergebracht sein. Prinzipiell sind solche Lösungen bekannt, hierbei wird das Additiv erst dann freigesetzt, wenn ein ummantelndes oder abschließendes Teil sich aufgelöst hat, oder es werden Additive verwendet, bei denen artfremde Stoffe, wie PTFE (Teflon) zugesetzt wurden.

Die US 4,265,748 zeigt einen Flüssigkeitsfilter für eine Brennkraftmaschine, wobei ein Additiv in einem Container innerhalb des Filters angeordnet ist, wobei der Container über ein Diaphragma verschlossen ist, welches sich im Kontakt mit dem heißen Öl auflöst.

Bei der US 4,066,559 sind die Additive in Polymeren eingebettet, welche sich bei vorgegebenen Motortemperaturen auflösen.

Die US 4,014,794 zeigt einen Ölfilter bei dem sind öllösliche feste Polymere vorgeschlagen, welche sich im Öl langsam zersetzen und dadurch viskositätsverbessernd wirken. Zusätzlich können weitere Additive in dem Polymer eingebettet sein.

Die US 5,209,842 zeigt eine Ölfilterkartusche für eine Brennkraftmaschine, wobei im Inneren der Kartusche ein Additiv in Form von festen PTFE-Partikeln angeordnet ist, welche sich im Kontakt mit dem heißen Öl auftrennen und durch das Filterelement in den Ölkreislauf übernommen werden.

Nachteilig bei diesen Lösungen ist, dass das Additiv erst dann freigesetzt wird, wenn ein ummantelndes oder abschließendes Teil sich aufgelöst hat, oder es werden inerte Trägersubstanzen wie Polymerisate verwendet oder artfremde Stoffe wie PTFE zugesetzt. Problematisch ist hierbei, dass in den Ölkreislauf Substanzen eingetragen werden, deren Einflüsse auf den Ölkreislauf nicht absolut bekannt sind. Weitere Lösungsansätze bestehen darin, komplizierte mechanische Systeme, wie spezielle Verkapselungen, perforierte Ummantelungen, spezielle Injektoren und / oder zusätzlich zu schaffende abgetrennte Räume zu verwenden. Beispiele hierzu sind in der US 5,718,258 angegeben. Nachteilig ist hierbei der hohe konstruktive und kostenintensive Aufwand zur Erzielung einer effektiven Additivbeimengung in den Fluidkreislauf.

Aufgabe der Erfindung ist es daher, die oben genannten Nachteile zu vermeiden und eine Vorrichtung zur Filterung von flüssigen Fluiden zu schaffen, welche kostengünstig in der Herstellung, einfach im Handling und gezielt bei der Zusetzung von Additiven anzuwenden ist. Eine weitere Aufgabe ist es, ein Verfahren anzugeben, mit welchem ein Additiv dem Fluidkreislauf zuführbar ist. Diese Aufgaben werden durch die Merkmale der Patentansprüche 1 und 23 gelöst.

### Vorteile der Erfindung

Die erfindungsgemäße Vorrichtung zur Filterung von flüssigen Fluiden weist ein Gehäuse, einen im Gehäuse angeordneten Fluideinlass und ein im Gehäuse angeordneten Fluidauslass auf, wobei zwischen Fluideinlass und Fluidauslass Mittel zur Entfernung von Partikeln aus dem Fluidstrom vorhanden sind und zusätzlich in der Vorrichtung wenigstens ein Additiv zur funktionalen Änderung der Fluideigenschaften angeordnet ist, auf. Die Vorrichtung kann hierbei im Haupt- oder im Nebenstrom eines Fluidkreislaufes angeordnet sein und das Gehäuse jedwede beliebige Form aufweisen. Fluideinlass und Auslass können dabei an sich gegenüberliegenden Seiten des Gehäuses nebeneinander oder konzentrisch zueinander angeordnet sein. Die Anordnung ist für die Funktion unwichtig, wichtig ist nur, dass dichtend zwischen Ein- und Auslass wenigstens ein Mittel zur Entfernung von Partikeln aus dem Fluidstrom anzuordnen ist. Das Additiv ist im Inneren des Gehäuse, also im Innenvolumen der Vorrichtung, korrespondierend zu wenigstens einer geometrischen Vorgabe durch den inneren Aufbau der Vorrichtung oder des Mittels zur Entfernung der Partikel angeordnet oder geformt. Hierbei liegt das Additiv in einer kolloid-dispersen Form vor. Das Additiv weist also einen gelartigen, elastischen aber dennoch formbeständigen Aggregatzustand auf, wodurch es in einer geometrischen Form herstellbar ist und somit den geometrischen Vorgaben durch den inneren Aufbau der Vorrichtung oder des Mittels zur Entfernung der Partikel angepasst werden kann. Dadurch lässt sich eine annähernd formschlüssige Verbindung zwischen dem Gehäuse und / oder dem Mittel zur Entfernung der Partikel erzielen. Das Additivgel kommt prinzipiell ohne eine weitere Ummantelung durch lösliche Komponenten aus. Die Freisetzung der Additivkomponenten erfolgt bevorzugt über die Standzeit der Filtervorrichtung, wodurch der Gesamtbedarf an Additiv geringer ist, als wenn man das Additiv von Anfang einmalig zudosieren würde. Hierdurch lassen sich entweder gleiche Funktionswerte mit einer geringeren Gesamtadditivmenge erreichen, wie dies aktuell in Verbindung mit dem Low-SAP-Ölen gefordert wird, oder es lassen sich bei gleicher Gesamtadditivmenge weitaus bessere Funktionswerte erreichen. Vorteilhaft ist, dass das Konzept für alle filtrierbaren, additivierten Flüssigkeiten einsetzbar ist, wie z. B. Motoren- und Getriebeöle, Kraftstoffe, Kompressoren- und Hydrauliköle, Harnstoff-Wasser-Lösungen, Kühl- und Schmiermittel, usw. Ebenso vorteilhaft ist, dass durch die Formbarkeit des Additives geometrische Gegebenheiten des Innenvolumens des Gehäuses genutzt werden können, um das Additiv im Gehäuse der Filtervorrichtung anzuordnen, ohne weitere technische Voraussetzungen zur Unterbringung, Umspülung und Arretierung des Additives treffen zu müssen. Es ist somit möglich, durch eine geschickte Wahl der Geometrie des Additives, dieses in Standardfiltervorrichtungen zu integrieren, ohne ein Veränderung an der Vorrichtung vornehmen zu müssen. Beim Kontakt mit der zu additivierenden Flüssigkeit löst sich das Additiv-Gel langsam in seine unterschiedlichen Additiv-Komponenten auf. So können die gewünschten Additive wie sie sind genutzt werden, ohne ein Träger Polymerisat oder eine komplizierte technische Anordnung verwenden zu müssen. Die Verbindung innerhalb des Additiv-Gels beruht auf einer physikalischen Vernetzung aufgrund polarer Wechselwirkungen zwischen partiell geladenen funktionalen Gruppen. Eine Polymerisat-Verbindung beruht hingegen auf einer chemischen Verbindung vieler Einzelmonomere eines Monomeres zu einem einzigen langkettigen Polymer. Gele sind Mixturen aus zwei oder mehr Substanzen und weisen in eine halbfeste Form, die sich eher an einem festen Objekt als an einer Flüssigkeit orientieren. (Parker, Dictionary of Scientific and Technical Terms, Fifth Edition, McGraw Hill, Copyright 1994) Unter die Bezeichnung Additiv-Gel soll jedes Gel, welches sich aus der Kombination mindestens zweier Flüssigkeitslöslichen Additive ergibt. Hierbei sind alle Kombinationen aus verschiedenen Dispergiermitteln, aus Dispergiermittel und einer Säure, aus einem Dispergiermittel und einer Base und aus weiteren Kombinationen heraus gemeint. Weitere Eigenschaften von Gelen, in kolloid-disperser Form können auch dem Römpps Chemie-Lexikon von Otto-Albrecht Neumüller in der 8. Ausgabe von 1983 der Franckh'schen Verlagshandlung entnommen werden.

Gemäß einer vorteilhaften Ausgestaltung der Erfindung ist das Mittel zur Entfernung der Partikel aus dem Fluidstrom wenigstens ein im Wesentlichen hohlzylindrisches Filterelement. Hierbei kann das Filterelement zur Filtrierung ein beliebig gefaltetes Filterpapier oder auch ein beispielsweise gewickeltes Vlies zur Filtrierung aufweisen, es sind jedwede im Stand der Technik bekannte Materialien zur Partikelfiltrierung bei Flüssigkeiten möglich.

Gemäß einer weiteren Ausgestaltung der Erfindung weist das hohlzylindrische Filterelement im Inneren ein konzentrisch dazu angeordnetes Stützrohr auf, welches für eine Stabilisierung des Filtermediums sorgt. Dieses Stützrohr kann dabei aus Kunststoff oder anderen flüssigkeitsgeeigneten Materialen gefertigt sein, und lösbar oder unlösbar mit dem Filtermedium verbunden sein. Diese Ausgestaltungen können sowohl bei Wechselfiltern als auch bei Filtermodulen oder Filterkartuschen angewendet werden.

Eine weitere Variante der Erfindung sieht vor, dass das Gehäuse unlösbar mit dem Gehäusedeckel und damit mit Filterelement verbunden ist und Mittel zur lösbaren Verbindung mit einem im Fluidkreislauf angeordneten Anschlussflansch aufweist. Diese Ausführung kennzeichnet den klassischen Wechselfilter, wobei die Filtervorrichtung nach einer vorgegebenen Benutzungsdauer aus dem Fluidkreislauf entfernt wird und durch eine neue Vorrichtung ersetzt wird. Als Mittel zur lösbaren Verbindung mit einem im Fluidkreislauf angeordneten Anschlussflansch kann z. B. eine zentrale Schraubverbindung, welche über eine umlaufende Dichtung abgedichtet ist, dienen, es sind aber auch weitere lösbare Verbindungsarten denkbar, solange für eine Abdichtung des Fluidkreislaufes gegenüber der Umgebung gesorgt ist.

Gemäß einer hierzu alternativen Ausgestaltung ist das Gehäuse zerstörungsfrei öffenbar und das Filterelement darin austauschbar, wobei das Gehäuse Mittel zur lösbaren Verbindung mit einem im Fluidkreislauf angeordneten Anschlussflansch aufweist und wobei fakultativ weitere Funktionselemente im Gehäuse angeordnet sind. Diese Ausführungsform beschreibt die klassische Filtermodulbauweise, wobei hier die Möglichkeit besteht, dass weitere Funktionselemente, wie z. B. einen Fluidkühler oder Sensoren, in das Gehäuse integriert sein können. Durch das Lösen eines Gehäuseteils von dem Anschlussflansch wird das Filterelement freigelegt, wobei das Filterelement daraufhin aus dem Restgehäuseteil herausgenommen und getauscht werden kann. Hierbei kann ebenso das Additiv, welches zum Zeitpunkt des Wechsels des Filtermediums im Normalfall völlig aufgelöst sein sollte, erneuert werden. Das Gehäuse kann über jedwede Mittel lösbar mit dem Anschlussflansch verbunden sein, wobei vorzugsweise das Gehäuse eine hohlzylindrische Glockenform aufweist mit einem Gewinde und einer im Gehäuse angeordneten radial und / oder axial wirkenden Dichtung zur Abdichtung des Fluidkreislaufes von der Umgebung.

Gemäß einer weiteren alternativen Ausgestaltung der Erfindung ist das Mittel zur Entfernung der Partikel aus dem Fluidstrom ein im Gehäuse angeordneter Rotor, wobei das Gehäuse der hierzu korrespondierende Stator ist. Diese Anordnung beschreibt den klassischen Fall beispielsweise einer Zentrifuge zur Abscheidung von Partikeln aus einem Fluidstrom, wobei das Fluid im Inneren des Gehäuses durch den Rotor in Rotation versetzt wird und die Partikel auf sie wirkende Zentrifugalkraft von der Flüssigkeit getrennt werden. Auch in diesem Fall ist es manchmal notwendig, über eine Additivierung eine funktionale Änderung oder Gleichhaltung der Fluideigenschaften über eine bestimmte Dauer zu erzielen.

In einer zweckmäßigen Variante der Erfindung ist das Additiv in Gelform zwischen zwei im Filtergehäuse angeordneten Filterelementen angeordnet, wobei die Filterelemente miteinander lösbar oder unlösbar verbunden sind. Vorzugsweise sind hierbei die beiden Filterelemente hohlzylindrisch und das zwischen den Filterelementen angeordnete Additiv weist ebenfalls eine hohlzylindrische Form auf. Die beiden Filterelemente können hierbei über eine Art Adapter miteinander lösbar geclipst oder z. B. unlösbar spiegelgeschweißt oder geklebt miteinander verbunden sein, wobei der Additivgelring in der Adapterplatte angeordnet ist. Der Additivgelring wird vor der Montage der beiden Filterelemente miteinander an seine bestimmungsgerechte Position geführt, wobei ein Durchfließen des Fluides durch den Anordnungsort des Additivgelrings vermieden werden muss, um eine Umgehung der Filtrierung zu vermeiden. Ein derart gestaltetes Filterelement kann beispielsweise im Austausch für einteilige standardhohlzylindrische Filterelemente eingesetzt werden. Durch diese spezielle Art der Anordnung des Additives ist eine Umgestaltung des Gehäuses nicht notwendig.

Gemäß einer alternativen Ausgestaltung der Erfindung ist das Additiv an einer oder an beiden Stirnseiten des Filterelementes angeordnet. In dieser Variante weist das gelförmige Additiv bevorzugt eine scheibenförmige Form auf, kann jedoch auch ringförmig, plattenförmig oder sonst wie gestaltet sein. Durch die Formbeständigkeit des gelförmigen Additivs ist es möglich, dieses mit z. B. einer Stirnendscheibe des Filterelementes lösbar oder unlösbar über eine kraftschlüssige oder formschlüssige Verbindung zu verbinden oder das gelförmige Additiv zwischen Stirnendscheibe und Filterelement anzuordnen.

In einer Weiterbildung der Erfindung ist das Additiv wenigstens teilweise hohlzylindrisch ausgeformt und wird mittels einer korrespondierenden Aufnahme mit dem Filterelement verbunden. In dieser Form korrespondieren die geometrische Form der Aufnahme und des Additives so miteinander, dass über ein Zusammenstecken von Additiv und Aufnahme eine feste Verbindung entsteht.

Gemäß einer Ausgestaltung der Erfindung ist das Additiv segmentartig, sich axial erstreckend mit dem Filterelement verbunden. Dabei kann das Segment eine Art sich axial erstreckendes Kuchenstück bzw. ein Segment eines hohlzylindrischen, sich axial erstreckenden Teilstückes darstellen.

In einer alternativen Anordnung ist das hohlzylindrische Filterelement sternförmig gefaltet und das gelförmige Additiv in wenigstens einer Einzelfaltung angeordnet. Auch in dieser Variante wird kein zusätzlicher Raum zur Unterbringung des Additives benötigt und bestehende Systeme lassen sich mit einem derart modifizierten Filterelement sofort in ein additivabgebendes System überführen. Die mit dem gelförmigen Additiv versehenen Einzelfalten übernehmen nach der Auflösung des Additives wieder ihre vorgesehene Filterwirkung, wodurch eine Einschränkung der Filterwirkung über die gesamte Zeitdauer der Filtrierung vermieden wird. Bevorzugt ist das Additiv dabei in mehreren Einzelfalten über den Umfang des Filterelementes verteilt angeordnet. Die am Anfang durch das Additivgel verschlossenen Filterfalten fallen bei dem anfangs noch sauberen Fluid nach einem Wechsel von Fluid und Filter nicht ins Gewicht, und bei zunehmender Verschmutzung werden die Filterfalten durch Auflösung des Additives wieder freigeben, wodurch eine gleichbleibende Filterqualität gewährleistet bleibt.

Gemäß einer weiteren Variante der Erfindung erstreckt sich das Additiv hohlzylinderförmig über wenigstens einen Teilbereich des hohlzylindrischen Filterelementes, welches über diesen Teilbereich einen geringeren Wirkdurchmesser als der übrige Teil des Filterelementes aufweist. In dem Teilbereich, in dem sich das Additiv über das hohlzylindrische Filterelement erstreckt, weist das Filterelement eine geringere Faltentiefe als in dem übrigen Bereich auf. Dadurch lässt sich das Additiv in hohlzylindrischer Form je nach Reduzierung der Faltentiefe im Innenbereich oder im Außenbereich des Filterelementes anordnen. Bevorzugt weist nach diesem Vorgang die projizierte Fläche des Filterelementes inklusive Additivgelring die gleiche Fläche wie ein Filterelement ohne Faltentiefenverminderung auf. Bei Anordnung des Additivgelringes im Innenbereich des Filterelementes bleibt bevorzugt der freie Innendurchmesser des Filterelementes über den gesamten Bereich gleich.

In einer Modifikation der Erfindung ist das Additiv im oder am Stützrohr mittels korrespondierender geometrischer Ausgestaltung angeordnet, wobei das Stützrohr vorzugsweise aus einem Kunststoff besteht. Hierzu sind bei der konstruktiven Gestaltung des Stützrohrs Aufnahmepunkte vorgesehen, mit Hilfe derer das gelartige Additiv im oder am Stützrohr korrespondierend zu diesen Aufnahmepunkten befestigt werden kann. Dabei kann das Additiv ebenfalls hohlzylindrisch sein und in das Stützrohr eingesteckt werden bzw. stiftförmig im Innenradius des Stützrohrs befestigt werden. Der Gestaltungsfreiheit werden hier kaum Grenzen gesetzt. Es muss nur darauf geachtet werden, dass durch die Anordnung des Additives für den Zeitrahmen, in dem das Additiv noch nicht vollständig aufgelöst ist, kein zu hoher Druckunterschied zwischen Rein- und Rohseite auftritt.

Gemäß einer weiteren Ausgestaltung der Erfindung ist das Additiv in wenigstens einem Segment im Innenbereich des Stützrohres angeordnet, wobei das Stützrohr wenigstens in diesem Bereich doppelwandig ausgeführt ist. Hier wird das Additiv in dem doppelwandigen Teil des Stützrohres aufgenommen und von diesem gehalten. Die beiden Wände sind perforiert, so dass ein Flüssigkeitskontakt mit dem Additiv gegeben ist und das Additiv seine Wirkstoffe an die Flüssigkeit abgeben kann. Bei der doppelwandigen Ausführung kann das Stützrohr einstückig mit der zweiten Wand ausgeführt sein oder aber es sich ebenso möglich, dass die zweite Wand lösbar oder unlösbar nachträglich mit dem Stützrohr verbunden wird.

Gemäß einer weiteren Ausgestaltung der Erfindung ist das Mittel zur lösbaren Verbindung zwischen Gehäuse und Anschlussflansch im Gehäusedeckel angeordnet, und das Additiv ist an der nach innen weisenden Seite des Gehäusedeckels angeordnet und mit diesem verbunden. Der Gehäusedeckel weist hierbei Durchflussöffnungen für den Fluideinlass und den Fluidauslass auf und wird bevorzugt über eine Schraubverbindung mit dem Anschlussflansch dichtend verbunden. Vorzugsweise hat hierbei der Gehäusedeckel eine zylinderscheibenförmige Form und weist konzentrisch im Inneren ein Innengewinde auf, welches auf einem mit einem Außengewinde versehenen Stutzen des Anschlussflansches aufgeschraubt wird. Auf der nach innen gerichteten Seite des Gehäusedeckels wird das gelförmige Additiv über geeignete Befestigungsvorrichtungen vom Gehäusedeckel gehalten. Die Befestigungsvorrichtungen können z. B. mit Widerhaken versetzte Spitzen sein, welche in das elastische gelförmige Additiv eindrückbar sind, ebenso sind Halteklammern, halboffene Volumina oder eine Verklebung denkbar.

Eine zweckmäßige Ausbildung des Erfindungsgedankens beinhaltet, dass das Gehäuse im Wesentlichen topfförmig gestaltet ist und das Additiv im zylindrischen Teil des topfförmigen Gehäuses an der inneren Gehäusewand angeordnet ist. Bevorzugt ist das Additivgel hierbei in einer hohlzylindrischen Form ausgebildet und liegt an den Innenwänden des zylindrischen Teils des topfförmigen Gehäuses an. Hier wird es über geeignete Aufnahmen beispielsweise festgeclipst oder kraft- bzw. formschlüssig gehalten. Denkbar ist ebenso, dass im Inneren des zylindrischen Teils des topfförmigen Gehäuses eine radial umlaufende breite Nut vorgesehen ist, in die das hohlzylindrische Additivgel eingelegt ist. Es ist allerdings ebenso denkbar, dass nur Segmente des Additivgels über den Umfang des zylinderförmigen Innenvolumens des topfförmigen Gehäuses verteilt im Gehäuse angeordnet werden.

Gemäß einer alternativen Anordnung ist das Additiv im Boden des topfförmigen Gehäuses angeordnet. Hierbei kann das Additiv, z. B. vergleichbar mit einem Einlegeteil, im Bodenbereich des topfförmigen Gehäuses verankert sein. Naturgemäß ist im Bodenbereich genügend Raum zur Anordnung des Additives ohne die Ausdehnung des Filterelementes zu beschränken. Das Additiv ist hierbei korrespondierend zur Innenkontur des Bodenbereiches des topfförmigen Gehäuses ausgestaltet und kann so einfach in den Boden eingelegt und mit dem Boden verbunden werden.

Gemäß einer alternativen Ausgestaltung der Erfindung ist das Additiv lösbar mit dem Boden des topfförmigen Gehäuses verbunden. Dieses hat gerade im Bereich der Filtermodule Vorteile, da bei einem Wechsel des Filterelementes das Additiv ebenfalls erneuert werden kann. Im Allgemeinen wird das topfförmige Gehäuse gelöst, um das darin liegende Filterelement zum Wechseln freizulegen und in diesem Arbeitsschritt kann dann ebenfalls ein neues Additivgel in den Boden des topfförmigen Gehäuses hineingedrückt werden. Durch eine geeignete Verkrallung wird das Additiv mit dem Boden verbunden und kann so beim weiteren Handling nicht herausfallen. Durch diese Maßnahme ist gewährleistet, dass über mehrere Wechselzyklen hinweg eine dauerhafte Additivversorgung sichergestellt ist.

Alternativ hierzu ist es vorteilhaft, das Additiv als Hülse im zylinderförmigen Teil des topfförmigen Gehäuses anzuordnen, wobei das Additiv wechselbar mit dem Gehäuse verbunden ist. Auch diese Lösung zielt auf Filtermodule ab, wobei eine Nachdosierung des Additives beim Wechsel des Filterelementes gewährleistet sein muss. Das Additiv wird hierbei hülsen- oder hohlzylinderförmig geformt und über z. B. eine Verkrallung oder Verklemmung im zylinderförmigen Teil des topfförmigen Gehäuses eingebunden. Es ist auch möglich, dass Additivgel als Ring in wenigstens eine in dem zylinderförmigen Teil des topfförmigen Gehäuses angeordnete Nut anzuordnen.

Eine besondere Ausführungsform der Vorrichtung ist dadurch gekennzeichnet, dass im Gehäuse ein mit Öffnungen versehenes weiteres Gehäuse angeordnet ist, welches das Additiv aufnimmt. Dieses weitere Gehäuse kann z. B. die Form eines Korbes oder beispielsweise eine eingezogenen, perforierten Zwischenwand darstellen. Weiterhin weist dieses weitere Gehäuse entweder eine Öffnung zum Wechseln des Additivgels oder eine Öffnungsmöglichkeit auf, um bei einem Filterelementwechsel erneutes Additiv in Gelform hinzuzufügen.

Gemäß einer weiteren Ausgestaltung der Erfindung ist die Filtervorrichtung als Zentrifuge ausgeführt und das Additiv ist wechselbar im Rotor angeordnet. Hierbei ist darauf zu achten, dass das Additiv rotationssymmetrisch im Rotor angeordnet ist, um eine Unwucht während der Rotation zu vermeiden. Das Additiv kann hierbei im Inneren oder im Äußeren des Rotors angeordnet sein und, wie oben beschrieben, wechselbar über z. B. eine umlaufende Nut oder eine Verkrallung mit dem Rotor verbunden sein.

Alternativ ist angedacht, das Additiv wechselbar im Stator der Zentrifuge anzuordnen, also im Gehäuse der Zentrifuge, wobei die Anordnung hierbei beliebig ist und einzig und allein die Platzverhältnisse eine Vorgabe für die Anordnung darstellen. Denkbar ist hierbei, das Additiv z. B. an den Gehäusewänden oder am Gehäuseboden anzuordnen, wobei es ebenfalls bevorzugt festgekrallt, geclipst oder in einem zusätzlichen Korb angeordnet ist.

Für ein Verfahren zur Additivbeimengung zu einer Flüssigkeit wird eine oben beschriebene Filtervorrichtung verwendet. Die Vorrichtung weist ein Gehäuse, einen im Gehäuse angeordneten Fluideinlass und ein im Gehäuse angeordneten Fluidauslass auf, wobei zwischen Fluideinlass und Fluidauslass Mittel zur Entfernung von Partikeln aus dem Fluidstrom vorhanden sind. In dem Gehäuse ist ein Additiv zur funktionalen Änderung der Fluideigenschaften angeordnet, wobei das Additiv in kolloid-disperser, formbeständiger und elastischer Form im Innenvolumen der Vorrichtung korrespondierend zu wenigstens einer geometrischen Vorgabe durch den inneren Aufbau der Vorrichtung oder als Mittel zur Entfernung der Partikel angeordnet und geformt ist. Die zu filternde und mit Additiv zu versehende Flüssigkeit wird hierbei durch die Vorrichtung durchgeleitet, wobei das Additiv in Kontakt mit der Flüssigkeit gerät und sich im Kontakt mit der Flüssigkeit zersetzt bzw. auflöst. Dabei ist die Zersetzungs- oder Auflösungsrate steuerbar, wobei unter steuerbar dosierbar, einstellbar oder auch regelbar zu verstehen ist. Die eigentliche Zersetzungs- oder Auflösungsrate pro Flächeneinheit des Additives, welche in Kontakt mit der Flüssigkeit steht, ist durch den chemischen Aufbau des Additives einstellbar. Durch die Anordnung und Formung des Additivgels im Inneren der Vorrichtung sowie durch konstruktive Maßnahmen im Inneren des Gehäuses lässt sich mit Hilfe der bekannten Zersetzungsrate die gewünschte Zersetzungsrate einstellen. Dadurch ist die Möglichkeit gegeben, entsprechend den Einsatzbedingungen der Filtervorrichtung, die Zersetzungsrate des Additives an die Bedingungen anzupassen.

Gemäß einer vorteilhaften Ausgestaltung des Verfahrens erfolgt die Steuerung der Zersetzungsrate durch eine teilweise Kapselung des Additives. Hierdurch lässt sich die Fläche des Additives, welche mit der Flüssigkeit in Kontakt gerät, beeinflussen, um so die Additivfreisetzung bevorzugt über die Gesamtdauer des Filtrierungsintervalles zu steuern.

In alternativer Weise kann das Verfahren derart beeinflusst werden, dass die Steuerung der Zersetzungsrate durch Positionierung des Additives in Bereichen geeigneter Durchströmungsgeschwindigkeiten erfolgt. Durch die Erhöhung oder Erniedrigung der Durchströmungsgeschwindigkeiten lässt sich die Zersetzungsrate einfach beeinflussen. Aufgrund der durch Versuche bekannten Durchströmungsgeschwindigkeiten im Inneren des Gehäuses ist es so möglich, durch die Positionierung des Additives wiederum die Zersetzungsrate dem Filtrierungsintervall bis zu einem Wechsel des Filterelementes anzupassen.

Eine weitere Möglichkeit zur Steuerung der Zersetzungsrate ist es, eine Temperierung mittels eines Heiz- und / oder Kühlelementes im Bereich der Additivanordnung in Abhängigkeit der gewünschten Additivfreisetzungsrate vorzunehmen. Hier kann beispielsweise ein Sensor die Fluidqualität messen und über Steuersignale die Temperierung des Heiz- oder Kühlelementes derart beeinflussen, dass eine dauerhaft gleiche Fluidqualität einstellbar ist. Für diesen Fall bewirkt eine Erhöhung der Temperatur im Bereich der Additivanordnung eine erhöhte Additivfreisetzung und eine Erniedrigung der Temperatur eine Absenkung der Additivfreisetzung.

Es ist ebenso möglich, die Steuerung der Zersetzungsrate über eine Veränderung der wirksamen Flüssigkeitsbenetzungsfläche des Additives über den Zeitraum des Wechselintervalls zu erzielen. Dieses kann beispielsweise über eine sich auflösende, über dem Additiv liegende, Membran oder auch über eine spezielle Anordnung des Additives im Gehäuse erfolgen. Ist das Additiv z. B. in einen kegelförmigen Gehäuseabschnitt des Gehäuses eingebracht, so verringert sich im Laufe der Zersetzung durch den verringerten Kegeldurchmesser auch die wirksame Flüssigkeitsbenetzungsfläche des Additives.

Gemäß einer alternativen Ausgestaltung des Verfahrens ist das Additiv eingekapselt im Gehäuse angeordnet, wobei in der Kapselung Öffnungen vorhanden sind, welche derart veränderbar sind, dass alle Öffnungsdurchmesser zwischen null und voller Öffnung einstellbar sind. Dieses kann z. B. direktmotorisch oder auch über eine kinematische Anlenkung dieser Öffnungen erfolgen. Weiterhin ist im Fluidkreislauf ein Sensor angeordnet, wodurch die Fluidqualität gemessen wird und wenigstens eines dieser Messergebnisse führt zu einer Einstellung der Öffnungsgröße der Öffnungen des Additivbehälters. Auf diese Art und Weise kann also aktiv und direkt die Additivfreisetzungsrate in Abhängigkeit der aktuellen Fluidqualität geregelt werden.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: verschiedene Ausgestaltungen eines erfindungsgemäßen Wechselfilters im Schnitt,
- Figur 2: eine spezielle Ausgestaltung eines erfindungsgemäßen Filterelementes im Schnitt,
- Figur 3: eine perspektivische Ansicht einer weiteren Ausgestaltung des erfindungsgemäßen Filterelementes und
- Figur 4 - 9: weitere Ausgestaltungen von erfindungsgemäßen Filterelementen im Schnitt.

### Beschreibung der Ausführungsbeispiele

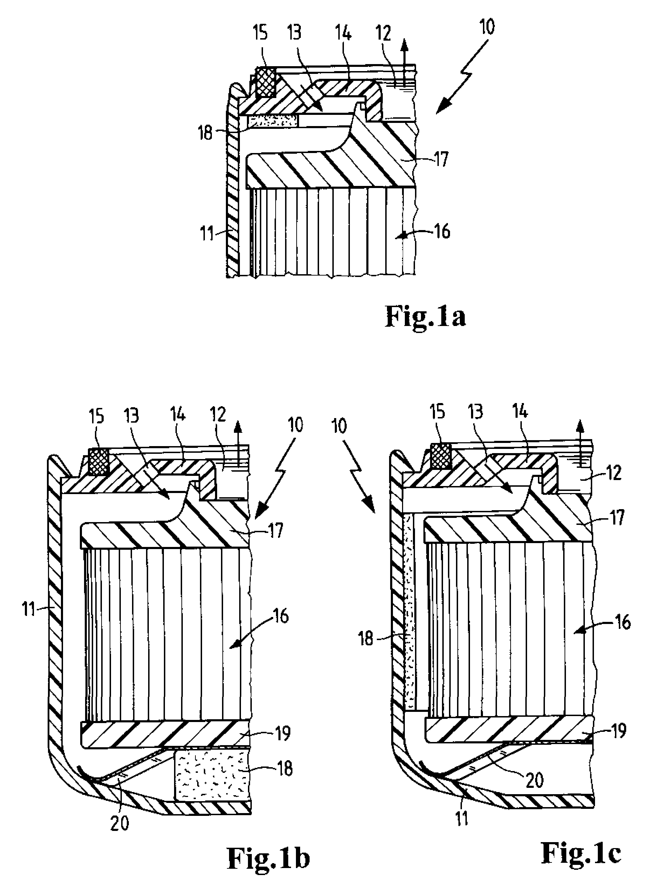

Die Figuren 1a, b, c zeigen einen erfindungsgemäßen Wechselfilter im Schnitt. Hierbei zeigt Figur 1a einen Teil der Filtervorrichtung 10 mit einem Gehäuse 11, wobei ein Auslass 12 und ein Einlass 13 in einem Gehäusedeckel 14, welcher unlösbar mit dem Gehäuse 11 verbunden ist, angeordnet sind. Der Gehäusedeckel 14 weist umlaufend eine Vierkantdichtung 15 auf, welche für eine axiale Abdichtung der Filtervorrichtung 10 im Zusammenspiel mit einem hier nicht gezeigten Anschlussflansch sorgt. Einlass 13 und Auslass 12 werden durch ein Filtermedium 16 mit einer stirnseitig oben angebrachten Endscheibe 17 getrennt. Das Filtermedium 16 ist hierbei ein sternförmig gefaltetes, hohlzylindrisches Papierfilterelement. Die Endscheibe 17 sorgt im oberen Bereich radial und axial dichtend für die Trennung von Roh- und Reinseite. Im unteren Bereich des Gehäusedeckels 14 ist radial umlaufend, in Form eines Ringes ein Additiv 18 angeordnet, welches aufgrund seiner gelförmigen Substanz formbeständig und elastisch ist, und mit dem Gehäusedeckel 14 verklebt ist. Das Additiv 18 ist hierbei auf der Rohseite der Filtervorrichtung 10 angeordnet, wird vom einströmenden Fluid umströmt, wobei es sich zersetzt bzw. auflöst und die Wirkstoffe an das Fluid abgibt.

Die Figur 1b zeigt eine alternative Ausgestaltung der Filtervorrichtung 10 im Teilschnitt. Das Filterelement besteht hierbei aus einer oberen Endscheibe 17, einem Filtermedium 16, welches wiederum aus einem sternförmig gefalteten Filterpapier besteht, und einer unteren Endscheibe 19. Die Endscheiben 17 und 19 sind bevorzugt aus einem thermoplastischen Kunststoffmaterial und werden beispielsweise über Kleben, Aufschmelzen oder Spiegelschweißen mit dem Filtermedium 16 verbunden. Die obere Endscheibe 17 wird bevorzugt im Zweikomponentenverfahren hergestellt, wobei der obere Bereich, welcher zur radialen und axialen Abdichtung dient, aus einem weichen Kunststoff hergestellt ist. Die untere Endscheibe 19 wird über eine Feder 20, welche sich am Boden des Gehäuses 11 abstützt, axial nach oben gedrückt und somit gegenüber dem Auslass 12 durch den axialen Anschlag durch die obere Endscheibe 17 fixiert. Das Additiv 18 ist diesmal als Block im Raum zwischen unterer Endscheibe 19 und Boden des Gehäuses 11 angeordnet. Die Endscheiben 17, 19 können selbstverständlich auch aus Metall bestehen.

Die Figur 1c zeigt eine dritte Variante eines erfindungsgemäßen Wechselfilters 10. Der prinzipielle Aufbau ist gegenüber den beiden vorhergehenden Figuren gleich, nur hier ist das Additiv 18 hohlzylindrisch aufgebaut und im Inneren des zylindrischen Anteils des topfförmigen Gehäuses 11 angeordnet. Hierbei kann das Additiv auch je nach gewünschter Menge aus einzelnen Segmenten bestehen oder nicht durchgehend ausgeformt sein.

Das Additiv kann hierbei über eine Klebung mit dem Gehäuse 11 verbunden oder z. B. in das Gehäuse eingepresst werden, wodurch die Verbindung dann kraftschlüssig erfolgt.

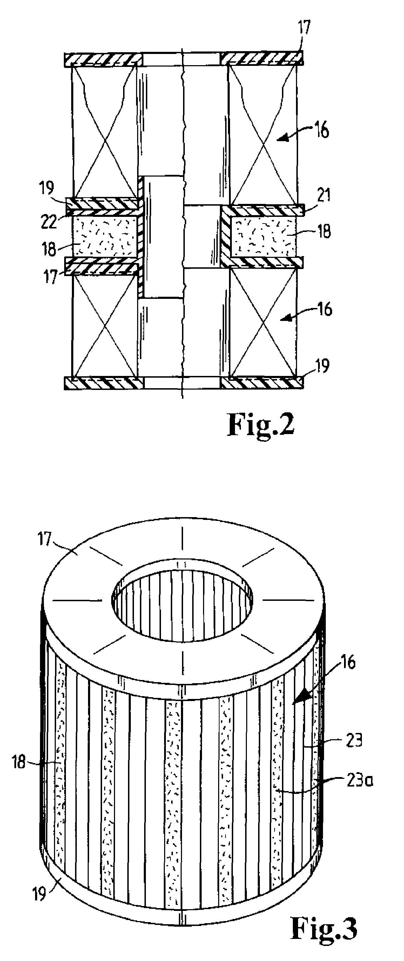

Die Figur 2 zeigt einen Teilschnitt durch ein erfindungsgemäßes Filterelement. Den vorherigen Figuren entsprechende Bauteile sind mit den gleichen Bezugszeichen versehen. Hierbei sind zwei Filterelemente über ein Verbindungsstück 21, 22 miteinander verbunden. Auf der linken Seite weisen beide Filterelemente eine obere Endscheibe 17 und eine untere Endscheibe 19 auf. Die untere Endscheibe 19 des oberen Filterelementes und die obere Endscheibe 17 des unteren Filterelementes sind beispielsweise über ein Kleb- oder Schweißverfahren mit einem Verbindungsstück 22 verbunden. Das hohlzylindrisch ausgeführte Verbindungsstück weist eine größere umlaufene Nut auf, in der das Additiv 18 aufgenommen wird. Auf der rechten Seite wird der untere Teil des Filtermediums 16 des oberen Filterelementes direkt von einem Verbindungsstück 21 aufgenommen so wie der obere Teil des Filtermediums 16 des unteren Filterelementes ebenso in dem Verbindungsstück 21 aufgenommen wird. Die Verbindung erfolgt hierbei wie bei einer Standardendscheibe über beispielsweise Kleb- oder Schweißverfahren und das Verbindungsstück 21 ist hohlzylindrisch, U-förmig aufgebaut, wobei die beiden Schenkel des Us nach außen weisen. Zwischen diesen Schenkeln ist das Additiv 18 angeordnet.

Die Figur 3 zeigt eine perspektivische Ansicht einer weiteren Ausgestaltung des erfindungsgemäßen Filterelementes. Den vorherigen Figuren entsprechende Bauteile sind mit den gleichen Bezugszeichen versehen. Das Filterelement besteht wiederum aus einem zick-zack-förmig gefalteten Filtermedium 16, wobei die Stirnseiten über eine obere Endscheibe 17 und eine untere Endscheibe 19 eingefasst werden. In regelmäßigen oder unregelmäßigen Abständen ist zwischen den Einzelfalten 23 des Filtermediums 16 das Additiv 18 in die Falten eindosiert. Hierbei ist das Verhältnis zwischen den offenen Falten 23 und den mit Additiv gefüllten Falten 23a derart zu wählen, dass auch am Anfang die gewünschte Filterwirkung erzielt werden kann und der Druckverlust nicht zu hoch gerät.

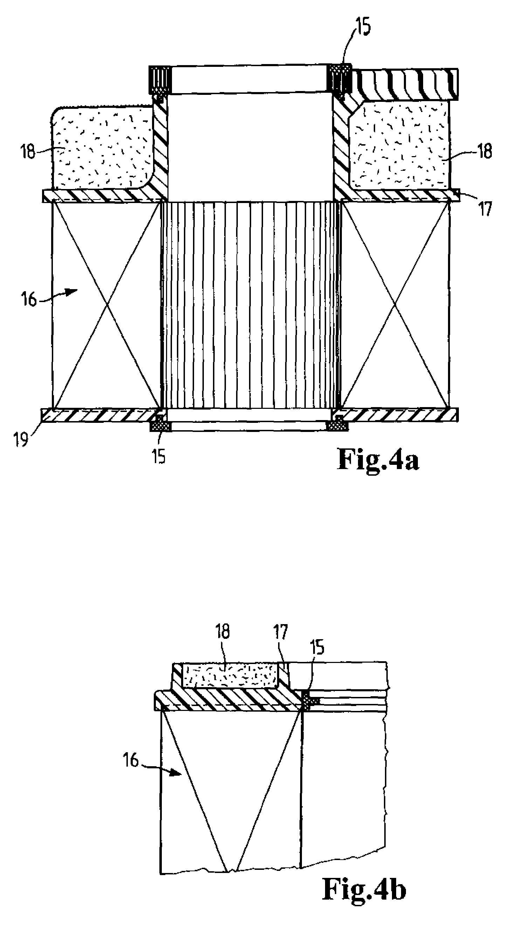

Die Figuren 4a und 4b zeigen eine weitere Ausgestaltung des erfindungsgemäßen Filterelementes im Schnitt. In der Figur 4a sind zwei Variationen der Additivanordnung in der oberen Endscheibe 17 in einem Teilschnitt dargestellt. Den vorherigen Figuren entsprechende Bauteile sind mit den gleichen Bezugszeichen versehen. Die obere Endscheibe 17 auf der linken Seite des Teilschnitts weist hierbei die Form eines seitenverkehrten L's auf, wobei der untere Schenkel mit dem Filtermedium 16 verbunden ist, und das Additiv 18 zwischen den beiden Schenkeln angeordnet ist. Am Ende des oberen Schenkels ist eine Dichtung 15 angeordnet, welche sowohl radial als auch axial abdichtet. Das Additiv kann hierbei jedoch selbstverständlich auch über eine gleichgeformte Endscheibe unterhalb des Filtermediums 16 angeordnet werden. Die obere Endscheibe 17 auf der rechten Seite des Teilschnitts weist eine U-förmige Form auf, wobei die beiden Schenkel des U's nach außen gerichtet sind. Auch hier weist die obere Endscheibe 17 im axial abschließenden oberen Bereich eine Dichtung 15 zur radialen und axialen Abdichtung des Systems auf. Das Additiv ist hierbei zwischen den beiden Schenkeln der oberen Endscheibe 17 angeordnet. In beiden Fällen wird die Endscheibe 17 mit dem Filtermedium 16 auf schon weiter oben beschriebene Art und Weise verbunden.

Die Figur 4b zeigt eine dritte Variante der endseitigen Anordnung des Additivs 18 auf. Die Endscheibe 17 weist hierbei ebenfalls die Form eines U's auf, jedoch sind hierbei die beiden Schenkel in axialer Richtung gerichtet. Das Additiv 18 ist wiederum in diesem nutförmigen Zwischenraum zwischen den beiden Schenkeln der oberen Endscheibe 17 angeordnet. Die Dichtung 15 ist hier als reine Radialdichtung ausgelegt. Die Verbindung zwischen Endscheibe 17 und Filtermedium 16 erfolgt wie oben beschrieben.

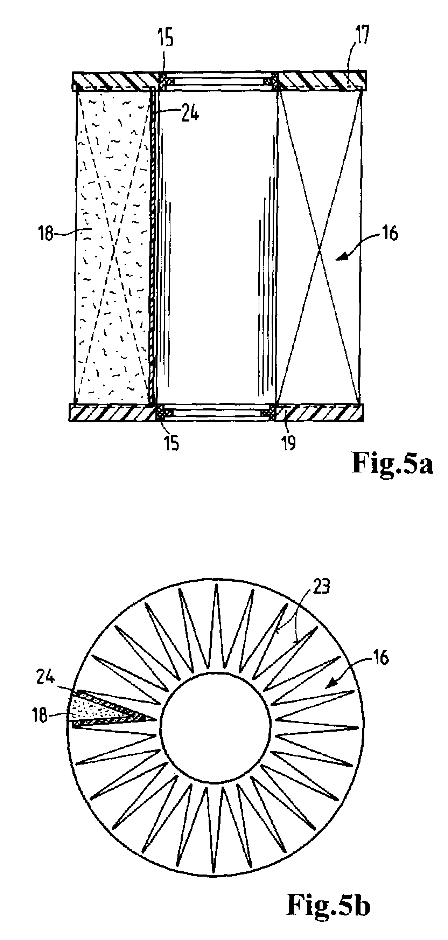

Figur 5a und 5b zeigen eine weitere Ausgestaltung des erfindungsgemäßen Filterelementes im Schnitt. Den vorherigen Figuren entsprechende Bauteile sind mit den gleichen Bezugszeichen versehen. Hier ist das Additiv in einem axial durchgängigen, V-förmigen Segment 24, welches zwischen zwei benachbarten Falten 23 des Filtermediums 16 angeordnet ist, angeordnet. Dieses Aufnahmesegment 24 ist bevorzugt aus einem thermoplastischen Kunststoff hergestellt und ist an den Endbereichen bevorzugt mit den stirnseitigen Endscheiben 17 und 19, ebenso wie das Filtermedium 16, verbunden. Entsprechend der gewünschten Wirkung ist es auch möglich, mehrere Aufnahmesegmente 24 in das Filterelement mit zu integrieren. Durch dieses Aufnahmesegment 24 erfährt das Additivgel 18 eine zusätzliche Stabilisierung.

Die Figur 5a zeigt eine Dichtung 15 analog zu Figur 4b.

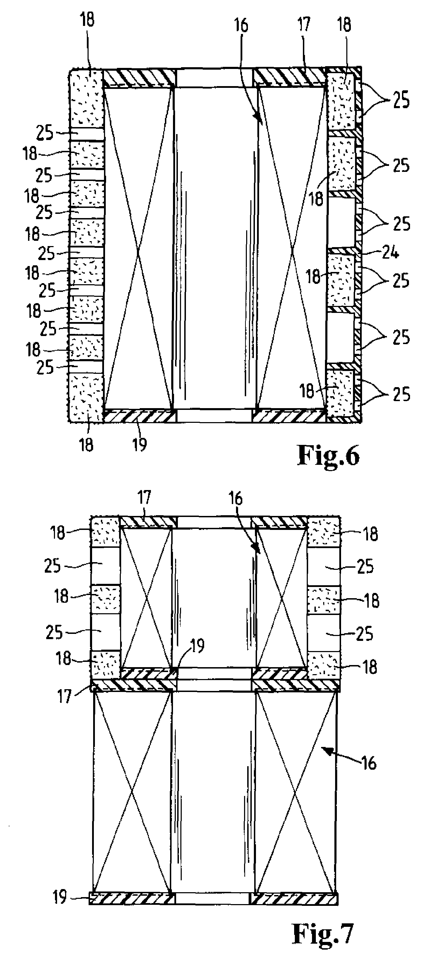

Die Figur 6 zeigt ebenfalls eine konstruktive Ausgestaltung eines erfindungsgemäßen Filterelementes im Schnitt. Den vorherigen Figuren entsprechende Bauteile sind mit den gleichen Bezugszeichen versehen. Die Figur 6 zeigt in einem Teilschnitt wiederum zwei mögliche Varianten des Aufbaus. Durch eine Reduzierung der Faltenbreite kann der eingesparte Raum für ein hohlzylindrisch ausgeführtes Additiv 18 genutzt werden, welches um das reduzierte Element herum angeordnet ist. Um am Anfang der Filterfunktion genügend Fluid durch das Filtermedium 16 hindurchgehen zu lassen, ist das Additiv 18 auf der linken Seite des Teilschnitts mit Durchgangsöffnungen 25, welche über den Umfang des hohlzylindrischen Additivgels herum verteilt sind. Im Laufe des Betriebes löst sich das Additiv 18 auf, wodurch weitere Filterfläche zur Filtrierung des Fluides freigegeben wird. Einen ähnlichen Weg beschreitet die rechte Lösung, hier ist das Additiv jedoch in einer Aufnahme 24, welche kreisringförmig um das eigentliche Filterelement herum angeordnet ist, aufgenommen. Auch diese Aufnahme 24 weist genügend viele Durchgangsöffnungen 25 auf, um den Flüssigkeitsdurchsatz zu gewährleisten. Zwischen den einzelnen nach innen gerichteten Stegen der Aufnahme 24, welche bevorzugt aus Kunststoff besteht, ist teilweise das Additiv 18 angeordnet. Je nach gewünschtem Δp zwischen Roh- und Reinseite ist die Anzahl der zu füllenden Kammern zu bestimmen.

Die Figur 7 zeigt einen Schnitt durch ein erfindungsgemäßes Filterelement an, wobei den vorhergehenden Figuren entsprechende Bauteile mit den gleichen Bezugszeichen versehen sind. Hier ist nur ein axialer Teilbereich des Filterelementes von einem hohlzylindrisch ausgeformten Additivgelring 18 umschlossen. Im Bereich dieser Umschließung weist das Filterelement ein Filtermedium mit geringerer Filterbreite auf, wobei die Addition aus Filterbreite und Dicke des Additivgelringes 18 im Wesentlichen die Filterbreite des nicht eingeschränkten Filtermediums erreicht. Der Additivgelring 18 ist wiederum durch Durchgangsöffnungen 25 unterbrochen, um so einen genügend großen Flüssigkeitsdurchgang zu gewährleisten. Das Teilelement mit geringerer Filterbreite und Additivgelring 18 ist mit dem übrigen Teilelement axial über Kleben, Schweißen oder sonstige bekannte Verbindungsarten verbunden.

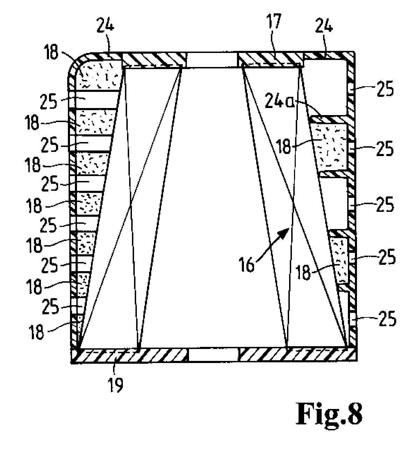

Die Figur 8 zeigt eine weitere Gestaltungsform des erfindungsgemäßen Filterelementes. Den vorherigen Figuren entsprechende Bauteile sind mit den gleichen Bezugszeichen versehen. Dieses Filterelement weist wiederum zwei endseitige Filterendscheiben 17 und 19 auf, wobei das Filtermedium 16 kegelstumpfförmig ausgeformt ist. Die im Inneren der Endscheiben 17, 19 vorhandenen Durchgangsöffnungen 25 weisen jedoch den gleichen Durchmesser auf. Das Filtermedium 16 ist achsparallel von einer Aufnahme 24 umschlossen, wobei auf der linken Seite des Teilschnittes der gesamte Zwischenraum zwischen Filtermedium 16 und Aufnahme 24 mit Additivgel 18 gefüllt ist, wobei Durchgangsöffnungen 25 zum Flüssigkeitsdurchlass vorhanden sind. Auf der rechten Seite ist die Aufnahme 24 noch mit radial nach innen verlaufenden Vorsprüngen 24a versehen, welche sich der zulaufenden Form des Filtermediums 16 anpassen. Die Aufnahme 24 ist hierbei auch mit Durchgangsöffnungen 25 versehen, wobei zwischen den Vorsprüngen im Inneren der Aufnahme 24 bevorzugt in jeder zweiten so gebildeten Kammer das Additiv 18 angeordnet ist.

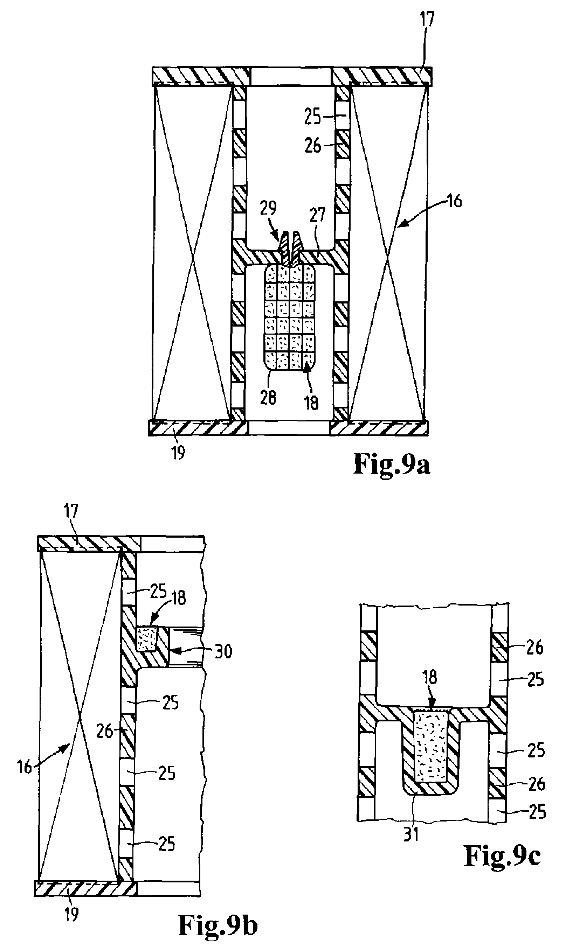

Die Figuren 9a, b, c zeigen letztendlich weitere Variationen des erfindungsgemäßen Filterelementes im Schnitt. Den vorherigen Figuren entsprechende Bauteile sind mit den gleichen Bezugszeichen versehen. Die Figur 9a zeigt ein Filterelement mit einer oberen Endscheibe 17 und einer unteren Endscheibe 19, welche stirnseitig ein Filtermedium 16 abschließen. Im Inneren des hohlzylindrischen Filterelementes 16 ist ein hohlzylindrisches Stützrohr 26 mit Durchgangsöffnungen 25 angeordnet, wobei Stützrohr 26, Endscheiben 17, 19 und Filtermedium 16 durch Kleb-, Schweiß- oder sonstige Verfahren unlösbar miteinander verbunden sind. Das Mittelrohr 26 ist über einen Steg 27, welcher konzentrisch zum Filterelement eine Öffnung aufweist, zusätzlich in der Mitte verbunden. In diesen Steg greift ein Käfig 28 ein, welcher das Additiv 18 enthält. Dieser Käfig weist über seinen Umfang verteilt regelmäßige Öffnungen auf, um einen Kontakt zwischen der Flüssigkeit und dem Additiv 18 zu gewährleisten. Der Käfig 28 wird über einen Schnapphaken 29 mit den Steg 27 verschnappt.

Die Figur 9b zeigt eine weitere Variante eines Filterelementes mit Stützrohr 26 auf, wobei das Stützrohr an wenigstens einem Teil eine nach innen geformte, U-förmige Ausbuchtung aufweist, welche umlaufend sein kann und das Additiv 18 aufnimmt. Die U-förmige Ausbuchtung 30 ist axial nach oben hin geöffnet und ragt in den Innenraum des Filterelementes.

Die Figur 9c zeigt eine dritte Variante des erfindungsgemäßen Filterelementes mit Stützrohr 26, wobei hier, ausgehend von den Innenwänden des Stützrohres, ein topfförmiger Behälter 31 gebildet wird. Dieser Behälter ist bevorzugt einstückig mit den Stützrohr 26 verbunden. In diesem nach oben hin offenen Behälter 31 ist das Additiv 18 angeordnet und wird von der Flüssigkeit im oberen Bereich benetzt, wobei es sich auflöst.

Auch die Varianten nach Figur 9b und Figur 9c weisen Durchgangsöffnungen 25 analog Figur 9 a auf.

## Patentansprüche

1. Vorrichtung zur Filterung von flüssigen Fluiden, mit einem Gehäuse, einem im Gehäuse angeordneten Fluideinlass und einem im Gehäuse angeordneten Fluidauslass, wobei zwischen Fluideinlass und Fluidauslass Mittel zur Entfernung von Partikeln aus dem Fluidstrom vorhanden sind, wobei in der Vorrichtung wenigstens ein Additiv zur funktionalen Änderung der Fluideigenschaften angeordnet ist, **dadurch gekennzeichnet, dass** das Additiv in kolloid-disperser, formbeständiger elastischer Form im Innenvolumen der Vorrichtung korrespondierend zu wenigstens einer geometrischen Vorgabe durch den inneren Aufbau der Vorrichtung oder des Mittels zur Entfernung der Partikel angeordnet und geformt ist.

2. Vorrichtung nach Anspruch 1, **dadurch gekennzeichnet, dass** das Mittel zur Entfernung der Partikel aus dem Fluidstrom wenigstens ein im Wesentlichen hohlzylindrisches, Filterelement ist.

3. Vorrichtung nach Anspruch 2, **dadurch gekennzeichnet, dass** im Inneren des Filterelementes ein Stützrohr angeordnet ist.

4. Vorrichtung nach Anspruch 2 oder 3, **dadurch gekennzeichnet, dass** das Gehäuse unlösbar mit einem Gehäusedeckel verbunden ist und Mittel zur lösbaren Verbindung mit einem im Fluidkreislauf angeordneten Anschlussflansch aufweist.

5. Vorrichtung nach Anspruch 2 oder 3, **dadurch gekennzeichnet, dass** das Gehäuse zerstörungsfrei öffenbar ist und das Filterelement austauschbar ist, wobei das Gehäuse Mittel zur lösbaren Verbindung mit einem im Fluidkreislauf angeordneten Anschlussflansch aufweist und wobei fakultativ weitere Funktionselemente im Gehäuse angeordnet sind.

6. Vorrichtung nach Anspruch 1, **dadurch gekennzeichnet, dass** das Mittel zur Entfernung der Partikel aus dem Fluidstrom ein im Gehäuse angeordneter Rotor ist, wobei das Gehäuse der hierzu korrespondierende Stator ist.

7. Vorrichtung nach einem der Ansprüche 2 bis 5, **dadurch gekennzeichnet, dass** das Additiv zwischen zwei im Filtergehäuse angeordneten Filterelementen angeordnet ist, wobei die Filterelemente miteinander lösbar oder unlösbar verbunden sind.

8. Vorrichtung nach einem der Ansprüche 2 bis 5, **dadurch gekennzeichnet, dass** das Additiv an einer oder an beiden Stirnseiten des Filterelementes angeordnet ist.

9. Vorrichtung nach einem der Ansprüche 7 bis 8, **dadurch gekennzeichnet, dass** das Additiv wenigstens teilweise hohlzylindrisch ausgeformt ist und mittels einer korrespondierenden Aufnahme mit dem Filterelement verbunden ist.

10. Vorrichtung nach wenigstens einem der Ansprüche 2 bis 5 und 7 bis 9, **dadurch gekennzeichnet, dass** das Additiv segmentartig, sich axial erstreckend, mit dem Filterelement verbunden ist.

11. Vorrichtung nach einem der Ansprüche 2 bis 5, **dadurch gekennzeichnet, dass** das hohlzylindrische Filterelement sternförmig gefaltet ist und das gelförmige Additiv in wenigstens einer Einzelfalte angeordnet ist und/oder dass das Additiv sich hohlzylinderförmig über wenigstens einen Teilbereich des hohlzylindrischen Filterelementes, welches über diesen Teilbereich einen geringeren Wirkdurchmesser aufweist, erstreckt.

12. Vorrichtung nach Anspruch 3, **dadurch gekennzeichnet, dass** das Additiv im oder am Stützrohr mittels korrespondierender geometrischer Ausgestaltung angeordnet ist, wobei das Stützrohr vorzugsweise aus einem Kunststoff besteht und/oder dass das Additiv in wenigstens einem Segment im Innenbereich des Stützrohres angeordnet ist, wobei das Stützrohr wenigstens in diesem Bereich doppelwandig ausgeführt ist.

13. Vorrichtung nach Anspruch 4, **dadurch gekennzeichnet, dass** die Mittel zur lösbaren Verbindung im Gehäusedeckel angeordnet sind und das Additiv an der nach Innen weisenden Seite des Gehäusedeckels angeordnet und mit diesem verbunden ist.

14. Vorrichtung nach Anspruch 4 oder 13, **dadurch gekennzeichnet, dass** das Gehäuse im Wesentlichen topfförmig gestaltet ist und das Additiv im zylindrischen Teil des Gehäuses an der inneren Gehäusewand angeordnet ist und/oder im Boden des topfförmigen Gehäuses angeordnet ist.

15. Vorrichtung nach Anspruch 5, **dadurch gekennzeichnet, dass** das Gehäuse topfförmig ist und im Bodenbereich Mittel zur Aufnahme des Additives vorhanden sind, wobei das Additiv lösbar mit dem Boden verbunden ist.

16. Vorrichtung nach Anspruch 5 oder 15, **dadurch gekennzeichnet, dass** das Additiv als Hülse im zylinderförmigen Teil des topfförmigen Gehäuses angeordnet ist, wobei das Additiv wechselbar mit dem Gehäuse verbunden ist.

17. Vorrichtung nach einem der Ansprüche 1 bis 3 und 5 bis 6, **dadurch gekennzeichnet, dass** im Gehäuse ein mit Öffnungen versehenes weiteres Gehäuse angeordnet ist, welches das Additiv aufnimmt, wobei das Additiv in diesem weiteren Gehäuse wechselbar ist.

18. Vorrichtung nach Anspruch 6, **dadurch gekennzeichnet, dass** das Additiv wechselbar im Rotor und/oder wechselbar im Stator angeordnet ist.

19. Verfahren zur Additivbeimengung zu einer Flüssigkeit mit einer Vorrichtung nach Anspruch 1, **dadurch gekennzeichnet, dass** das Additiv sich im Kontakt mit der Flüssigkeit zersetzt wobei die Zersetzungsrate steuerbar ist, insbesondere durch eine teilweise Kapselung des Additives und/oder durch Positionierung des Additives in Bereichen geeigneter Durchströmungsgeschwindigkeiten und/oder durch eine Temperierung mittels eines Heiz- und/oder Kühlelementes im Bereich der Additivanordnung in Abhängigkeit der gewünschten Additivfreisetzung und/oder über eine Veränderung der wirksamen Flüssigkeitsbenetzungsfläche des Additives erfolgt, wobei insbesondere das Additiv eingekapselt im Gehäuse angeordnet ist und in der Kapselung Öffnungen vorhanden sind, wobei die Öffnungen derart veränderbar sind, dass alle Öffnungsdurchmesser zwischen Null und voller Öffnung einstellbar sind und dass die Öffnungsgröße in Abhängigkeit wenigstens eines Messergebnisses wenigstens eines Sensors eingestellt wird..
